# EUROPÄISCHE PATENTSCHRIFT

(11) **EP 2 794 180 B1**
(45) Veröffentlichungstag und Bekanntmachung des Hinweises auf die Patenterteilung: **16.12.2015**
(21) Anmeldenummer: 12810090.6
(22) Anmeldetag: 17.12.2012
(51) Int. Cl.: B23P 6/00, B23Q 9/00, B24B 19/14, F01D 5/00, B23K 26/00

(54) **VORRICHTUNG ZUM REKONTURIEREN EINER GASTURBINENSCHAUFEL**
DEVICE FOR RECONTOURING A GAS TURBINE BLADE
DISPOSITIF DE REPROFILAGE D'UNE AUBE DE TURBINE À GAZ

(30) Priorität: 22.12.2011 DE 102011089699
(43) Veröffentlichungstag der Anmeldung: 29.10.2014
(73) Patentinhaber: Lufthansa Technik AG, 22335 Hamburg (DE)
(72) Erfinder: CZERNER, Stefan, 22767 Hamburg (DE)
(74) Vertreter: Müller Verweyen
(86) Internationale Anmeldenummer: PCT/EP2012/005195
(87) Internationale Veröffentlichungsnummer: WO 2013/091811

(56) Entgegenhaltungen:
- EP-A1- 2 130 638
- EP-A1- 2 161 095
- JP-A- 4 289 154
- US-B1- 6 302 625

## Beschreibung

Die Erfindung betrifft eine Vorrichtung zum Rekonturieren einer Gasturbinenschaufel mit den Merkmalen des Oberbegriffs von Anspruch 1. Eine solche Vorrichtung ist aus der US 6,302,625 bekannt.

Die Schaufeln in Gasturbinen, insbesondere in Flugzeugtriebwerken, unterliegen im Betrieb einem durch erosive Partikel, bspw. durch Sand oder Staub, verursachten Verschleiß.

Im vorderen Teil der Gasturbine, dem Bereich des Kompressors, führt Erosion in der Regel zu einer Abflachung der Strömungs-Eintrittskanten (Leading Edge) der Kompressorschaufeln. Die Kompressorschaufeln der ersten Kompressorstufe, die sog. "Fan Blades", sind dabei um ein Vielfaches größer als weitere Schaufeln des Triebwerks. Die Kompressorschaufeln haben in ihrer unverschlissenen Form ein aerodynamisch optimiertes Profil, welches durch den Verschleiß nachteilig verändert wird.

Als Konsequenz einer solchen Verschlechterung des aerodynamischen Profils verliert die Gasturbine an Effizienz, das heißt die Gasturbine benötigt für die gleiche Arbeitsleistung mehr Treibstoff.

Aus wirtschaftlicher Sicht ist es daher erstrebenswert, dem Verschleiß von Kompressorschaufeln, insbesondere einer Verschlechterung von aerodynamisch optimierten Schaufelgeometrien, entgegenzuwirken.

Zu diesem Zweck haben sich Reparaturverfahren etabliert, die darauf abzielen, beschädigte Kompressorschaufeln wieder mit möglichst aerodynamischen optimalen Geometrien zu versehen.

Aus der US 6,302,625 B1 ist eine Vorrichtung bekannt, mit der die Schaufelkante rekonturiert werden kann. Diese Vorrichtung wird mittels verschiedener Positionierer während des Rekonturierungsvorganges in einer vorbestimmten Ausrichtung zu der Schaufel geführt.

Die Positionierer bilden eine Art Zwangsführung der Vorrichtung zu der Schaufel, so dass die Vorrichtung durch Aufsetzen auf die Schaufelkante und Verschieben entlang der Schaufelkante einfach gehandhabt werden kann.

Die Positionierer sind in einer seitlichen Fläche eines sich konisch verjüngenden Schlitzes angeordnet, mit dem die Vorrichtung auf eine der Kanten der Schaufel aufgesteckt wird. Beim Aufschieben der Vorrichtung auf die Schaufelkante gelangen die Positionierer seitlich an einer der Schaufeloberflächen zur Anlage. Die Aufstecktiefe der Vorrichtung auf die Schaufelkante ist durch die Konizität und die Tiefe des Spaltes der Vorrichtung begrenzt. Der eigentliche die Form der Schaufel verändernde Abschnitt der Vorrichtung ist in dem Grund des Spaltes angeordnet.

Der konische Spalt bildet damit eine Führung für die Vorrichtung, wobei die Tiefe, mit der die Vorrichtung auf die Schaufel aufgesteckt wird, von der individuellen Handhabung der Vorrichtung abhängig ist. Da die Rekonturierung der Schaufel bei dieser Vorrichtung mittels einer Oberflächenbearbeitung erfolgt, ist es außerdem erforderlich, dass ein gewisser Mindestabstand der Schaufelkante von dem Spaltgrund zur Bildung eines Hohlraumes vorhanden ist, in den überschüssiges Material aufnehmbar ist. Aufgrund dieses vorhandenen Mindestabstandes ist eine positionsgenaue Führung der Vorrichtung in Bezug zu der in den Spalt hineinragenden Tiefe der Schaufelkante nicht möglich.

Des Weiteren sind manche Gasturbinenschaufeln, beispielsweise neuartige Fan Blades, mit geometrisch komplexen Kantengeometrien versehen, die ein präzises Bearbeiten der Schaufelkanten durch bekannte Vorrichtungen erschweren.

Beispielsweise arbeitet bei bestimmten Fan Blades der obere Bereich der Schaufel während des Betriebs im Überschallbereich und der untere im Unterschallbereich. Aus diesem Grund wird die Kontur der Schaufel sowohl im Anstellwinkel als auch im Profilquerschnitt geändert und weist eine komplexe geometrische Kantengeometrie auf, die nur schwer präzise bearbeitbar ist.

Ferner wird durch eine üblicherweise eingesetzte spanende Bearbeitung immer Grundmaterial von der Gasturbinenschaufel abgetragen und damit die Sehnenlänge der Schaufel durch den Rekonturierungsvorgang verkürzt.

Aufgabe der Erfindung ist es daher, eine Vorrichtung zum Rekonturieren einer Gasturbinenschaufel zu schaffen, bei der die oben genannten Probleme reduziert oder vermieden werden können.

Zur Lösung der Aufgabe wird eine Vorrichtung zum Rekonturieren einer Gasturbinenschaufel vorgeschlagen, mit:
- mindestens einem Auflager, das dazu eingerichtet ist, während des Rekonturierens auf einer Kante der Gasturbinenschaufel aufzuliegen,
- mindestens einem Seitenlager, das dazu eingerichtet ist, während des Rekonturierens auf der Saug- und/oder Druckseite der Gasturbinenschaufel in einer seitlichen Richtung anzuliegen,
- einer Bearbeitungseinheit, über die die Bearbeitung der Gasturbinenschaufel erfolgt, wobei
die Bearbeitungseinheit dazu eingerichtet ist, mittels eines Energiestrahls mindestens einen Teilbereich der Kante derart gezielt aufzuschmelzen, dass der Werkstoff im Wesentlichen ohne Zugabe von zusätzlichem Werkstoff zu einer Neukontur erstarrt.

Der besondere Vorteil der vorgeschlagenen Führung ist darin zu sehen, dass eine vorteilhafte Führung der Bearbeitungseinheit an der zu bearbeitenden Kante entlang erfolgt, so dass die an der Vorrichtung vorgesehene Bearbeitungseinheit in einem konstanten Bearbeitungsabstand zu der Kante bzw. in einer konstanten Ausrichtung zu der Kante geführt wird. Die Vorrichtung ist somit in der Lage, dem Verlauf der Kante zu folgen. Dies ist besonders vorteilhaft, da der Abstand und die Ausrichtung der vorgeschlagenen Bearbeitungseinheit zu der Kante für die Qualität der Rekonturierung von besonderer Bedeutung sind, wie dies z.B. bei einem Aufschmelzen der Kante der Fall ist.

Des Weiteren kann die Vorrichtung auch auf geometrisch sehr komplexen Schaufelkantengeometrien eingesetzt werden, insbesondere auch auf verschiedenen unterschiedlichen Typen von Gasturbinenschaufeln.

Die Qualität des Rekonturierens wird dabei dadurch verbessert, dass die Bearbeitungseinheit dazu eingerichtet ist, mittels eines Energiestrahls mindestens einen Teilbereich der Kante derart gezielt aufzuschmelzen, dass der Werkstoff im Wesentlichen ohne Zugabe von zusätzlichem Werkstoff zu einer Neukontur erstarrt. Der Energiestrahl ist dabei vorzugsweise als Laserstrahl ausgeführt, der sich für die erfindungsgemäße Rekonturierung gut eignet.

Eine Vorrichtung, die für eine solche Bearbeitung der Schaufelkante durch einen Energiestrahl im Wesentlichen ohne Zugabe von zusätzlichem Werkstoff eingerichtet ist, unterscheidet sich deutlich von den bekannten Vorrichtungen. Ein besonderer Vorteil der Vorrichtung ist, dass kein Materialverlust durch Spanverfahren (bspw. Schleifprozesse) bei der Rekonturierung entsteht. Es entsteht durch das Rekonturieren dementsprechend auch keine (bzw. eine äußerst minimale) Veränderung des Momentengewichts und dementsprechend keine messbare (bzw. eine äußerst geringe) Veränderung des Rundlaufs aufgrund von Massenträgheit der Gasturbinenschaufeln im eingebauten Zustand.

Darüber hinaus liegt ein Vorteil einer solchen Vorrichtung darin, dass sich die Sehnenlänge (auch Chordlänge genannt) der Gasturbinenschaufeln durch das Bearbeiten mit der Vorrichtung nicht weiter verkürzt, sondern, wie an späterer Stelle beschrieben, sogar zum Teil wieder aufgebaut werden kann. Die Gasturbinenschaufel kann dadurch deutlich länger eingesetzt werden, was die Wartungskosten des Triebwerks signifikant reduziert.

Erfindungsgemäß erstarrt der Werkstoff durch das Bearbeiten mit der Vorrichtung im Wesentlichen ohne Zugabe von zusätzlichem Werkstoff zu einer vorgegebenen Kontur. Vorgegeben bedeutet dabei, dass das Aufschmelzen des Werkstoffs und die sich anschließende Geometrieänderung nicht wahllos erfolgen, sondern dass die Vorrichtung es ermöglicht, eine der Ursprungskontur des Neuteils ähnliche bestimmte Gestalt bzw. Geometrie zu schaffen, die bspw. hinsichtlich ihrer aerodynamischen Eigenschaften vorteilhaft ist.

Eine "Neukontur" bezeichnet somit ein Profil, das sich weitgehend am Auslieferungszustand des Neuteils orientiert.

Vorzugsweise können in den von dem Energiestrahl aufgeschmolzenen Bereich sehr kleine Mengen von Zusatzstoffen eingebracht werden. Zwar zeichnet sich die Bearbeitung dadurch aus, dass im Wesentlichen auf die Zugabe von zusätzlichem Material verzichtet werden kann, es können aber sehr kleine Mengen (weniger als 50 % des aufgeschmolzenen Volumens) an Zusatzstoffen in die Schmelzzone eingebracht werden, um bspw. eine besonders harte, erosionsbeständige oder anderweitig vorteilhafte Eintrittskante zu realisieren. Der Unterschied zu bekannten Verfahren besteht darin, dass diese Additive weniger dazu dienen, um erodiertes Volumen der Eintrittskante wiederherzustellen (wie es beispielsweise beim Auftragsschweißen der Fall ist), sondern um die Materialeigenschaften der Eintrittskante vorteilhaft zu verändern.

Neben dem Rekonturieren im Wesentlichen ohne Zugabe von Zusatzmaterial kann die Vorrichtung in einer bevorzugten Ausführungsform auch zusätzlich dazu eingerichtet sein, unter Zugabe von Zusatzmaterial in einem Auftragsschweißprozess eine Rekonturierung der Schaufelkante durchzuführen.

Die Bearbeitungseinheit kann bevorzugt auch Elemente, beispielsweise Spiegel umfassen, durch die der Laserstrahl in seitlicher Richtung hin- und hergeschwenkt werden kann, um den Laserstrahl so stets auf die Kante gerichtet zu halten.

Die Vorrichtung umfasst vorzugsweise eine Lasereinheit zur Erzeugung des Laserstrahls, wobei der Laserstrahl vorzugsweise über Lichtleiter von einem Erzeuger zur Bearbeitungseinheit geleitet wird. Er tritt aus dem Lichtleiter an der Bearbeitungseinheit aus und trifft auf der Kante auf. Demnach ist der Lichtleiter vorzugsweise auf die Kante gerichtet. Das Auftreffen auf die Kante wird dabei auch als "Einkoppeln" bezeichnet. Durch das Einkoppeln des Lasers wird Energie in die Kante eingeleitet, die zum Umschmelzen bzw. Rekonturieren der Kante eingesetzt wird.

Die gesamte Vorrichtung ist dabei vorzugsweise tragbar. Die Vorrichtung umfasst bevorzugt einen handlichen Aufsatz, in dem die Bearbeitungseinheit angeordnet ist und der durch die Auf- und Seitenlager entlang der Kante geführt wird, sowie eine mit dem handlichen Aufsatz verbundene Lasereinheit, in der ein Laser erzeugt und dann zur Bearbeitungseinheit weitergeleitet wird. Insgesamt ist die Vorrichtung bevorzugt so dimensioniert, dass sie für den mobilen Einsatz an verschiedenen Standorten geeignet ist.

Damit ist eine Rekonturierung mehrerer Schaufeln "on wing" möglich, wodurch die Wartungszeit, in der die Gasturbine nicht einsatzbereit ist, erheblich verkürzt werden kann. Bei einer on wing Bearbeitung erfolgt die Rekonturierung der Schaufeln während diese in einem an einer Tragfläche eines Flugzeugs hängenden Triebwerk eingebaut sind. Durch die tragbare Vorrichtung kann sie in einfacher Weise von Einsatzort zu Einsatzort transportiert werden, um dort eine on wing Rekonturierung der Schaufeln zu ermöglichen.

Eine spanende Bearbeitung kann alternativ oder zusätzlich zu der zuvor beschriebenen spanlosen Bearbeitung erfolgen. Vorzugsweise umfasst die Bearbeitungseinheit auch Mittel zur spanenden Bearbeitung. Die Bearbeitungseinheit kann dabei auch beispielsweise austauschbar sein und die Vorrichtung kann durch Wahl der Bearbeitungseinheit zur spanenden oder spanlosen Rekonturierung einsetzbar sein.

Ähnlich wie bei dem spanlosen Bearbeiten kann das Bauteil im Bezug auf seine aerodynamischen Eigenschaften durch eine spanende Vorrichtung bzw. Bearbeitungseinheit verbessert werden. Die dabei erzeugte Spankontur ist aerodynamisch günstiger als die durch Verschleiß erzeugte Erosionskontur.

Die zuvor beschriebene Neukontur durch spanlose Bearbeitung verleiht der Schaufel in der Regel noch weiter verbesserte aerodynamische Eigenschaften als dies bei einer spanenden Bearbeitung der Fall ist.

Die Führung der Vorrichtung kann durch eine Reihe von weiteren Merkmalen verbessert werden.

Vorzugsweise weist die Vorrichtung beispielsweise mindestens zwei Auflager und mindestens zwei Seitenlager auf. Die Stabilität und Führungssicherheit der Vorrichtung können so erhöht werden.

Vorzugsweise ist die Bearbeitungseinheit zwischen den Auflagern angeordnet. Eine Anordnung zwischen den Auflagern wirkt sich vorteilhaft auf die Bearbeitungspräzision aus, da die Vorrichtung so gegenüber einem etwaigen Verkippen in Bearbeitungsrichtung besser geschützt ist.

Vorzugsweise weisen die Seitenlager jeweils mindestens zwei Anlagepunkte und/oder Anlageflächen auf. Je nachdem, ob das Seitenlager beispielsweise mitdrehende Elemente umfasst, können die Seitenlager über Flächen oder Punkte mit der Schaufel in Berührung stehen. Die Seitenlager führen die Vorrichtung, so dass das Bearbeitungselement stets präzise eingesetzt werden kann.

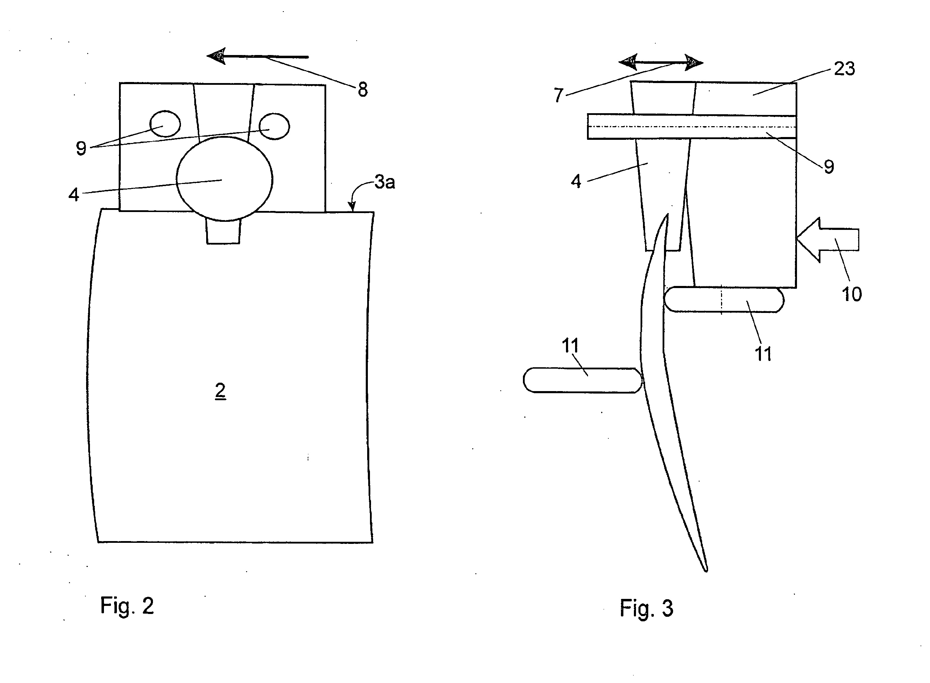

Diese Führung kann vorzugsweise dadurch verbessert werden, dass die Anlagepunkte und/oder Anlageflächen mindestens eines Seitenlagers in einer Kontaktebene mit dem Auflagepunkt bzw. der Auflagefläche eines Auflagers liegen. Diese Kontaktebene verläuft vorzugsweise senkrecht zur Bearbeitungsrichtung, wie an späterer Stelle anhand der Figuren 2 bis 5 ausführlich beschrieben wird. Der Vorteil einer solchen Anordnung ist darin zu sehen, dass sie eine im Vergleich zu bekannten Vorrichtungen präzisere Führung der Vorrichtung ermöglicht.

Die Führungssicherheit kann dadurch weiter verbessert werden, wenn eine weitere zweite Kontaktebene vorgesehen wird, bei der ebenfalls die Anlagepunkte von Seiten- und Auflager in einer Ebene liegen, die wiederum vorzugsweise senkrecht zur Bearbeitungsrichtung verläuft. Somit ist es bevorzugt, wenn die Anlagepunkte und/oder Anlageflächen mindestens eines weiteren Seitenlagers in einer Kontaktebene mit dem Auflagepunkt bzw. der Auflagefläche eines weiteren Auflagers liegen.

Um Schleifspuren und/oder Kratzer an der Gasturbinenschaufel zu vermeiden, sind vorzugsweise ein oder mehrere der Auflager und/oder Seitenlager durch drehbar gelagerte Rollen gebildet.

Zur Verbesserung des Anliegens der Vorrichtung an der Gasturbinenschaufel ist bzw. sind vorzugsweise auf der den Seitenlagern gegenüberliegenden Saug- und/oder Druckseite der Gasturbinenschaufel eine oder mehrere Anpresseinrichtung(en) vorgesehen. Vorzugsweise ist mindestens eine Anpresseinrichtung vorgesehen. Die Krafteinbringung erfolgt vorzugsweise durch bewegbare Rollen oder Bänder, die über pneumatische Druckstempel und/oder Federelemente die Andruckkräfte unabhängig von der Dicke der Gasturbinenschaufel erzeugen. Dementsprechend umfasst die mindestens eine Anpresseinrichtung vorzugsweise Pneumatik-, Hydraulik- und/oder Federelemente.

Durch die Anpresseinrichtung kann sich die Vorrichtung praktisch selbst an der Schaufel unter Ausübung einer Klemmkraft festlegen, so dass sich die Vorrichtung auch unter den während des Bearbeitungsvorganges über die Bearbeitungseinheit wirkenden Reaktionskräften nicht von der Schaufel löst oder sich ungewollt relativ zu der Schaufel bewegt.

Vorzugsweise umfasst die Anpresseinrichtung drehbar gelagerte Rollen. Insgesamt kann durch die Verwendung von Rollen ein wesentlich gleichmäßigerer Bewegungsvorgang realisiert werden, wodurch insbesondere bei einer kontinuierlichen Rekonturierung der Kante sehr geringe und gleichmäßige Vorschubgeschwindigkeiten ermöglicht werden.

In diesem Fall ist es vorteilhaft, wenn zumindest eine Rolle über eine Antriebseinrichtung antreibbar ist. Durch die Antriebseinrichtung kann die Vorrichtung gesteuert entlang der Kante der Schaufel bewegt werden, wobei eine Steuerung insbesondere sehr gleichmäßige und kleine Vorschubbewegungen ermöglicht.

Weiter wird vorgeschlagen, dass die Antriebseinrichtung und die Bearbeitungseinheit gekoppelt ansteuerbar sind. Soweit die Bearbeitungseinheit die Kante z.B. durch Aufschmelzen, Auftragsschweißen oder auch eine spanende Bearbeitung rekonturiert, hat die Vorschubgeschwindigkeit der Vorrichtung wenigstens einen mittelbaren Einfluss auf die Formgenauigkeit der rekonturierten Kante, so dass durch eine gekoppelte Ansteuerung der Antriebseinrichtung und der Bearbeitungseinheit dieser Zusammenhang berücksichtigt werden kann. So kann z.B. die Bearbeitungseinheit bei Erreichen einer Endstellung der Vorrichtung oder bei einem Stillstand der Vorrichtung automatisch abgeschaltet werden, oder bei einer schnellen Führung die Intensität der Bearbeitung erhöht werden. Dementsprechend kann bei einem langsamen Führen die Intensität verringert werden.

Ferner wird vorgeschlagen, dass die Rollen mit einem Elastomer beschichtet sind. Durch die vorgeschlagene Beschichtung der Rollen sind diese an der Oberfläche zumindest geringfügig elastisch, so dass geringe Unebenheiten an der Oberfläche der Schaufel ausgeglichen werden können und außerdem elastische Klemmkräfte einfacher auf die Schaufel ausgeübt werden können, ohne dass die Vorrichtung in sich besonders elastisch ausgebildet sein muss.

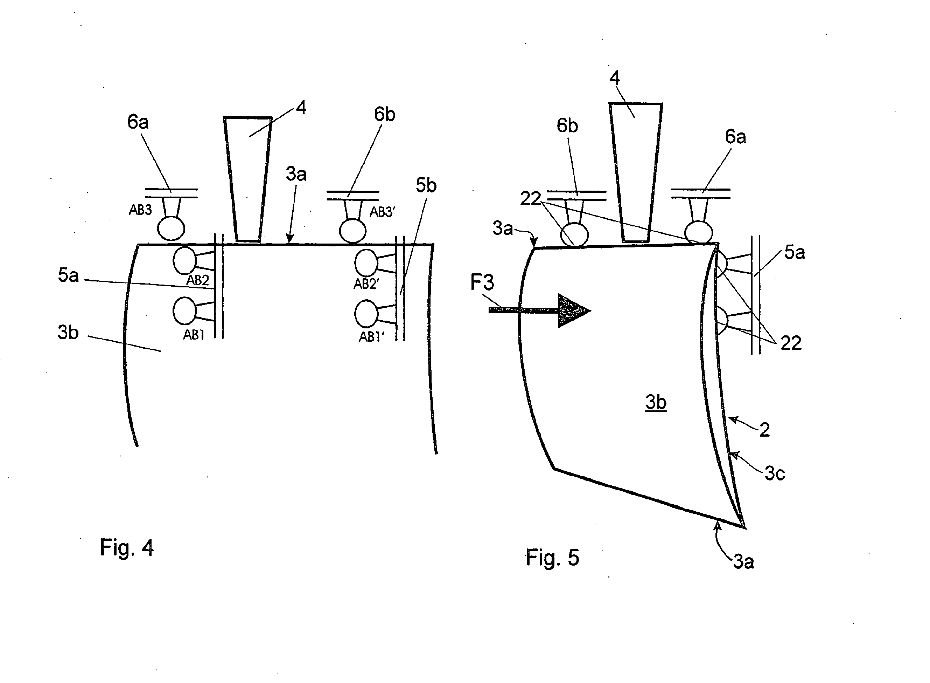

In einer weiteren bevorzugten Ausführungsform umfasst mindestens eines der Auflager zwei Rollen, die über eine drehbar gelagerte Achse miteinander verbunden sind und wobei die Bearbeitung zwischen den zwei Rollen erfolgt. Auf diese Weise wird es ermöglicht, dass die Bearbeitungsebene mit einer Kontaktebene zusammenfällt. Diese vorteilhafte Ausführung wird an späterer Stelle anhand der Figur 5 erläutert.

Vorzugsweise ist die Bearbeitungseinheit in einer Richtung senkrecht zur Bearbeitungsrichtung verschieblich.

Das Merkmal senkrecht zur Bearbeitungsrichtung umfasst dabei alle Richtungen, die quer zur Bearbeitungsrichtung verlaufen. Dabei sind zwei Richtungen bevorzugt. Einerseits die seitliche Richtung, in der auch die Seitenlager an der Gasturbinenschaufel anliegen, sowie der Vertikalrichtung, die sowohl zur Bearbeitungsrichtung als auch zur seitlichen Richtung senkrecht steht. Demnach ist die Bearbeitungseinheit vorzugsweise in seitlicher Richtung und/oder in Vertikalrichtung verschieblich.

Eine Verschieblichkeit senkrecht zur Bearbeitungsrichtung ermöglicht es der Bearbeitungseinheit dem Verlauf der Kante besonders gut zu folgen, sowohl seitlichen Unregelmäßigkeiten, also auch Abweichungen in Vertikalrichtung. Dies können beispielsweise Dellen oder bereits vorgenommene Verrundungen sein. Solche Unregelmäßigkeiten können, wie an späterer Stelle ausführlich beschrieben wird, die Qualität einer Rekonturierung nachteilig beeinflussen.

Die Erfindung wird im Folgenden anhand bevorzugter Ausführungsformen unter Bezugnahme auf die beigefügten Figuren erläutert. Dabei zeigt:
- Fig. 1:: eine Vorrichtung zur Rekonturierung an einer Kante einer Schaufel;
- Fig. 2:: eine Seitenansicht der auf einer Schaufelkante positionierten Bearbeitungseinheit;
- Fig. 3:: eine Schnittansicht der auf einer Gasturbinenschaufel positionierten Bearbeitungseinheit mit einer Rolle zum Ausgleich von Dellen in der Gasturbinenschaufel;
- Fig. 4:: eine Darstellung der bevorzugten doppelten Dreipunktlagerung der Vorrichtung;
- Fig. 5:: eine Darstellung von auf die Schaufel einwirkenden Kräften;
- Fig. 6:: eine gemischte Seitenan- und Draufsicht der auf einer Schaufelkante positionierten Vorrichtung;
- Fig. 7:: eine gemischte Seitenan- und Draufsicht einer weiteren Ausführungsform der Vorrichtung;
- Fig. 8:: eine Schnittansicht durch eine Eintrittskante einer Gasturbinenschaufel vor und nach dem Rekonturieren; und
- Fig. 9:: eine Darstellung der druckgesteuerten Nachführung der Höhenzustellung.

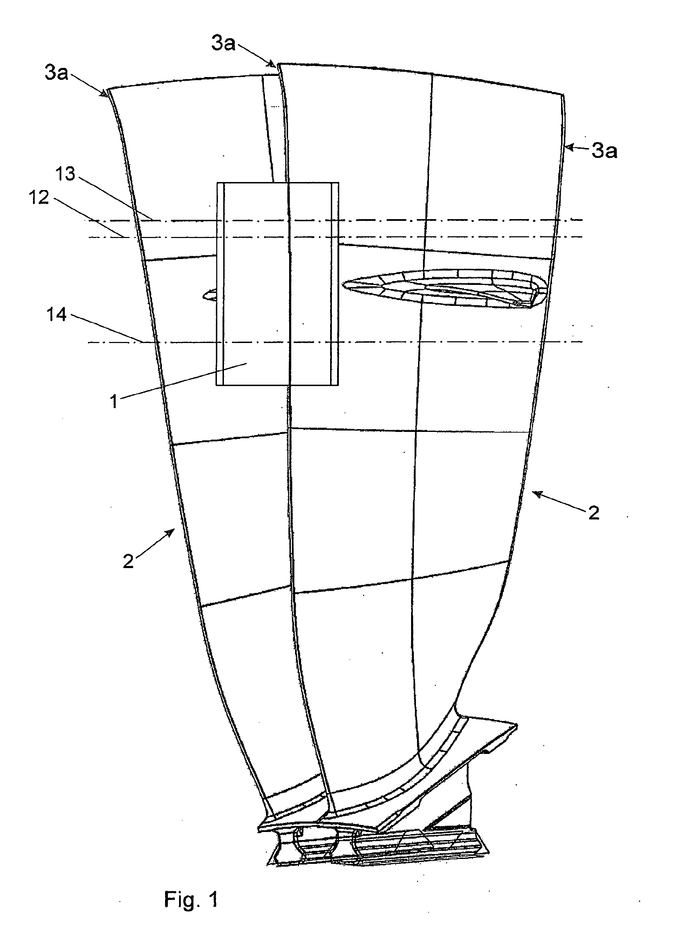

In der Figur 1 ist eine erfindungsgemäße Vorrichtung 1 an einer Schaufel 2 zu erkennen, welche Teil eines Schaufelkranzes einer Kompressorstufe oder eines Leitschaufelringes einer Gasturbine, insbesondere eines Flugzeugtriebwerkes, ist. Die Vorrichtung 1 ist in ihren Außenabmessungen derart bemessen, dass sie in einem Strömungskanal zu einer benachbarten Schaufel 2 geführt werden kann, ohne dass Schaufeln 2 dazu demontiert werden müssen. Damit ist eine Rekonturierung der Schaufel 2 "on wing" möglich, wodurch die Wartungszeit, in der die Gasturbine nicht einsatzbereit ist, erheblich verkürzt werden kann. Bei einer on wing Bearbeitung erfolgt die Rekonturierung der Schaufel 2 während diese in einem an einer Tragfläche eines Flugzeugs hängenden Triebwerk eingebaut ist. Die Schaufel 2 muss demnach zur Bearbeitung nicht aus dem Triebwerk ausgebaut werden.

Die Schaufeln 2 weisen jeweils zwei Kanten 3a auf, eine Strömungseintritts- und eine Strömungsaustrittskante. Mit der Vorrichtung 1 können sowohl die Strömungseintritts- als auch die Strömungsaustrittskante bearbeitet und rekonturiert werden.

In der Figur 1 sind zudem die an späterer Stelle ausführlich beschriebene Bearbeitungsebene 12 sowie die zwei Führungs- bzw. Kontaktebenen 13 und 14 dargestellt.

In der Figur 2 ist eine Seitenansicht der Bearbeitungseinheit 4 dargestellt, die Teil der Vorrichtung 1 ist und auf einer Schaufelkante 3a positioniert ist. Die Bearbeitungseinheit 4 wird zusammen mit der Vorrichtung 1 entlang einer Bearbeitungsrichtung 8 entlang der Kante 3a geführt. In dieser Darstellung sind das Gehäuse der Vorrichtung 1 und weitere Vorrichtungsteile der Übersicht halber weggelassen worden.

Während der Bearbeitungsbewegung wird durch die Bearbeitungseinheit 4 eine Rekonturierung der Kante 3a durchgeführt, bei der es sich in diesem Ausführungsbeispiel um die Strömungseintrittskante der Schaufel 2 handelt.

Über Verschiebeachsen 9 kann die Bearbeitungseinheit 4 in Richtung der Bildebene verschoben werden. Dieser Verschiebemechanismus ist in der Figur 2 weiter dargestellt.

In der Figur 3 ist eine Schnittansicht durch die Bearbeitungseinheit 4 dargestellt, die auf einer ebenfalls im Schnitt dargestellten Schaufel 2 positioniert ist. Die Schaufel 2 weist naturgemäß eine konvexe Saugseite 3b und eine konkave Druckseite 3c auf.

Die Vorrichtung 1 umfasst in diesem Ausführungsbeispiel eine axiale Verstelleinheit 23, die mittels Verschiebeachsen 9 mit der Bearbeitungseinheit 4 verbunden ist, wodurch die seitliche Verschiebemöglichkeit der Bearbeitungseinheit 4 ermöglicht wird. Die Verschiebemöglichkeit auf der Verschiebeachse 9 kann beispielsweise durch Lineareinheiten ermöglicht werden.

Weiterhin umfasst die Verstelleinheit 23 in diesem Ausführungsbeispiel eine mit einem Elastomer beschichtete Rolle 11, die auf der Schaufelseitenfläche, in diesem Fall der Druckseite 3c, angeordnet ist und zur Führung der Verstelleinheit 23 bzw. der mit der Verstelleinheit 23 verbundenen Bearbeitungseinheit 4 dient.

Die Bearbeitungseinheit 4 ist in seitlicher Richtung 7 verschieblich. Diese seitliche Richtung 7 verläuft quer zur Bearbeitungsrichtung 8. Sie verläuft in diesem Ausführungsbeispiel außerdem tangential zur Kante 3a. Die einseitig wirkende Verstellkraft 10 kann beispielsweise durch eine Feder oder Pneumatik bereitgestellt werden.

Unter der Bearbeitungsrichtung 8 ist die Richtung zu verstehen, entlang der die Vorrichtung 1 bewegt wird. Dabei kann die Richtung beispielsweise durch zwei Punkte (Start- und Endpunkt der Bearbeitung) definiert werden, die mit einer gedachten Linie (der Bearbeitungsrichtung 8) verbunden werden. Diese gedachte Linie ist insbesondere bei komplexen Schaufelgeometrien nicht identisch mit dem Kantenverlauf, der beispielsweise Kurven oder Verrundungen aufweist. An diese Abweichungen passt sich die Vorrichtung durch eine Verschieblichkeit der Bearbeitungseinheit an, so dass die Qualität der Rekonturierung verbessert wird.

Die Figuren 4 und 5 zeigen die bevorzugte doppelte Dreipunktlagerung der Vorrichtung 1. Eine Dreipunktlagerung umfasst immer ein Seitenlager 5a oder 5b, die jeweils über zwei Anlagepunkte 22 mit einer Seitenfläche der Schaufel 2 in Kontakt stehen, sowie jeweils ein Auflager 6a oder 6b, welches über einen Anlagepunkt 22 auf der Kante 3a der Schaufel aufliegt. In einem alternativen Ausführungsbeispiel können auch weitere Auflager vorgesehen werden.

In diesem Ausführungsbeispiel wird eine Dreipunktlagerung durch das Auflager 6a und das Seitenlager 5a gebildet, wobei das Auflager 6a den Führungspunkt AB3 und das Seitenlager 5a die Führungspunkte AB1 und AB2 umfasst.

Die zweite Dreipunktlagerung wird durch das Auflager 6b und das Seitenlager 5b gebildet, wobei das Auflager 6b den Führungspunkt AB3' und das Seitenlager 6a die Führungspunkte AB1' und AB2' umfasst.

Die Bearbeitungseinheit 4 ist zwischen den Dreipunktlagerungen angeordnet.

Die Abstützung der Andruckkräfte und der aus der Bewegung der Vorrichtung resultierenden Kräfte erfolgt durch die Druckkraft F3, die vorzugsweise auf der gegenüberliegenden Seite der Schaufel 2 angeordnet ist. Sie ist vorzugsweise in einem Bereich angeordnet, der mittig zwischen den Dreipunktlagerungen liegt. Alternativ kann auch mit mehreren Andruckkräften gearbeitet werden, deren resultierende Druckkraft in etwa der Druckkraft F3 entspricht.

Vorzugsweise werden die Andruckkräfte dazu genutzt, um über angetriebene Rollen 11 oder Bänder eine Vorschubbewegung auf der Schaufel 2 zu realisieren. Demnach ist eine motorisiert induzierte Vorschubbewegung bevorzugt, in einer anderen Ausführungsform können jedoch auch manuell induzierte Vorschubbewegungen bevorzugt sein. In der Figur 3 ist die linke Rolle 11 (auf der Saugseite 3b der Schaufel 2) als Andruckrolle ausgeführt, die rechte Rolle 11 (auf der Druckseite 3c der Schaufel 2) als Führungsrolle. Die Führungsrolle dient dazu, den Bearbeitungsprozess zu verschieben, wenn beispielsweise eine Delle in der Schaufel 2 zwischen den beiden Auflagern 6a und 6b vorhanden ist. Sie folgt der Abweichung der Schaufel 2 und führt den Bearbeitungsprozess nach. Die Andruckrolle, die die Vorschubbewegung realisiert, nutzt die Anpresskraft F3 zumindest zum Teil für einen Reibschluss.

Die Kraft F3 wird vorzugsweise über eine nicht dargestellte Anpresseinrichtung bereitgestellt, die vorzugsweise pneumatisch ausgeführt ist. Alternativ bevorzugt sind Kniehebelspanner, Hydraulik, Spindeln oder Linearmotoren.

Für den Einsatz oder die Entnahme der Vorrichtung 1 wird die Anpresseinrichtung bzw. die Kraft F3 zurückgefahren. Im Betrieb wird diese vorzugsweise kraftgesteuert den wechselnden Dicken der Bauteile nachgeführt.

Sofern notwendig, ist die Verstelleinheit 23 der Bearbeitungseinheit 4 vorzugsweise in der Lage, geringe Abweichungen und kleine Beschädigungen auf Höhe der Bearbeitung auszugleichen.

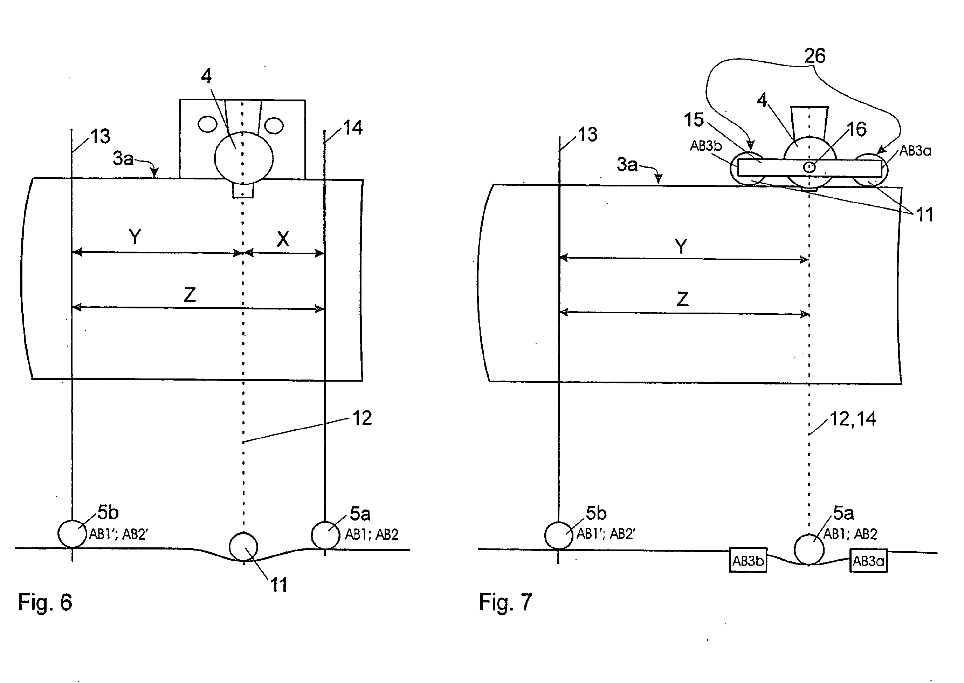

In den Figuren 6 und 7 sind die geometrischen Randbedingungen verdeutlicht dargestellt. Der obere Teil der Figuren ist jeweils eine Seitenansicht, der untere Teil jeweils eine Draufsicht. Die Vorrichtung 1 wird über zwei Dreipunktlagerungen, die jeweils in einer Kontaktebene 13, 14 liegen, an der Schaufel 2 entlang geführt.

Der Gesamtabstand Z der Kontaktebenen 13, 14 ist X + Y. Sollte beispielsweise eine Delle innerhalb der Schaufelkante eine Abweichung herbeiführen, so trifft diese mit dem Abstand X auf die Bearbeitungsebene 12. Diese Maßabweichung ist dann nicht vorhanden, wenn X = 0 ist. Sehr kleine Abweichungen werden erreicht, wenn X minimal und Y maximal ist.

Eine Rolle 11 ermöglicht es im Ausführungsbeispiel der Figur 6, die Bearbeitungseinheit 4 präzise entlang der Kante 3a zu führen, da die Bearbeitungseinheit 4 durch diese Nachführungsrolle ggf. an Abweichungen des Kantenverlaufs angepasst insbesondere seitlich verschoben werden kann.

Eine weitere Ausführungsform ist in der Figur 7 dargestellt. Hier ist der Wert X auf Null reduziert. Auch auf diese Weise ist eine maximale axiale Anpassungsgenauigkeit durch die Vorrichtung 1 erreicht.

Durch eine Reduzierung des Wertes X auf Null wird weiterhin der technische Vorteil erreicht, dass auch der tangentiale Angleich zur Strömungsfläche maximiert wird. Die beiden als Führungsrollen ausgeführten Führungspunkte AB1 und AB2 stellen hierbei den tangentialen Angleich sicher.

Das dabei unter Umständen auftretende Problem, dass die Positionierungsposition und die Bearbeitungsfunktion an derselben Stelle liegen, kann dadurch gelöst werden, dass das Auflager 6a bzw. der Führungspunkt AB3 durch ein Rollenpaar (26) ersetzt wird. Das Rollenpaar 26 (AB3b und AB3a) umfasst zwei Rollen 11, welche über eine Achse 15 verbunden sind und an der Bearbeitungseinheit 4 in einem Drehpunkt 16 angeordnet sind.

Durch die drehbare Achse können Maßungenauigkeiten, Rauhigkeiten und abweichende Höhen vor und nach der Bearbeitung ausgemittelt werden. Auf eine zusätzliche Rolle 11 zur Nachführung (wie beispielsweise in der Figur 6) kann dadurch verzichtet werden.

Die Bearbeitungseinheit 4 kann eine spanabhebende oder schleifende Bearbeitung der Kante 3a umfassen. Alternativ ist auch ein Materialauftrag durch ein Auftragsschweißen oder eine Umformung der Kante 3a durch ein Aufschmelzen der Kante 3a denkbar, wie dies z.B. in der von der Anmelderin eingereichten DE 10 2010 036 042 offenbart ist.

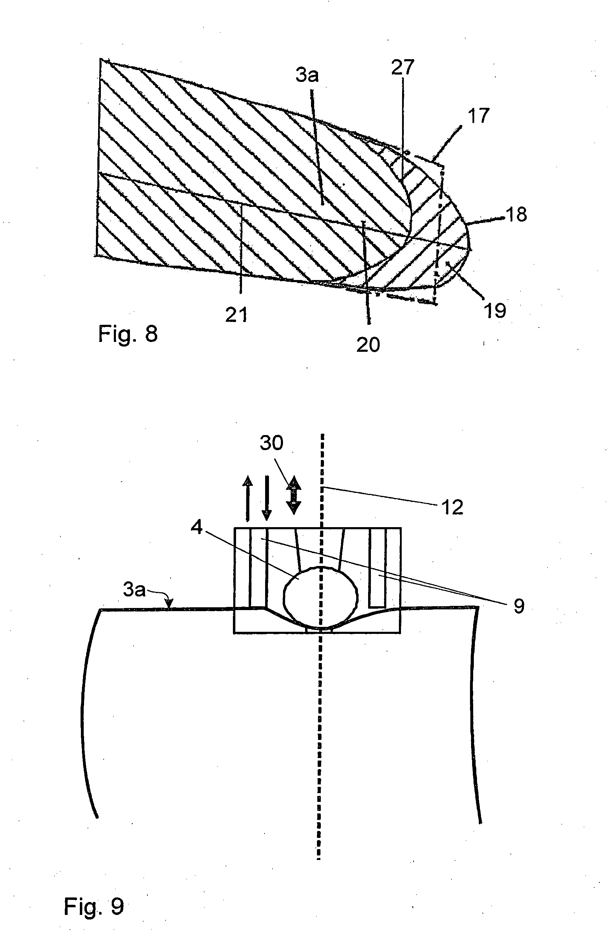

Beispielhaft soll das bevorzugte Umschmelzen der Kante 3a anhand der Figur 8 verdeutlicht werden.

In der Fig. 8 ist die Kante 3a vergrößert dargestellt. Dabei ist ihr Zustand vor der Reparatur durch die Vorrichtung 1 als Erosionskontur 17 zu erkennen. Die Erosionskontur 17 ist in der Regel näherungsweise planar und weist eine Stirnfläche auf. Der Zustand der Kante 3a nach der Reparatur ist als Neukontur 18 bzw. Spankontur 27 dargestellt. Durch die Vorrichtung, die vorzugsweise eine Lasereinheit zur Erzeugung eines Laserstrahls umfasst, wird ein gewisses Volumen der erodierten Kante 3a gezielt aufgeschmolzen und erkaltet zu einer aerodynamisch vorteilhafteren Gestalt. Dieser Übergang von der Erosionskontur 17 zu der Neukontur 18 ist hier durch eine Umverteilung des vorhandenen Materials verwirklicht. Es wird weder Material abgetragen noch hinzugefügt. Das wiedererstarrte Material 19 ist der vordere Bereich der Kante 3a, der aus einer Schmelze hervorgegangen ist, und hinter dem sich der Bereich mit dem ungeschmolzenen Grundmaterial 20 befindet.

Durch den Einsatz einer entsprechend eingerichteten Vorrichtung 1, die eine Lasereinheit zur Bearbeitung umfasst, kann somit die Sehnenlänge der Schaufel 2 zum Teil wieder aufgebaut werden. In der Figur 8 ist ein Sehnenlängenabschnitt 21 dargestellt.

Aufgrund der verbesserten Führung der Vorrichtung 1 kann die Bearbeitungseinheit 4 vorzugsweise berührungslos zu der Kante 3a bewegt werden, was nach der im Stand der Technik bekannten Lösung nicht möglich war. Der Abstand der Bearbeitungseinheit 4 ist wichtig, da die Rekonturierung der Kante 3a z.B. beim Aufschmelzen auch eine Formänderung der Kante 3a in Richtung der Bearbeitungseinheit 4 umfassen kann, was nicht durch das Anliegen der Bearbeitungseinheit 4 behindert werden sollte.

Für den Fall, dass die Bearbeitungseinheit 4 die Kante 3a durch Aufschmelzen oder Auftragsschweißen rekonturiert, liegt eine der zweiten Auflager 6a oder 6b an der noch nicht bearbeiteten, d.h. noch kalten Kante 3a an, während die jeweils andere zweite Führungseinrichtung 6a oder 6b an einem bereits rekonturierten Abschnitt der Kante 3a anliegt. Der Abstand der Auflager 6a und 6b von der Bearbeitungseinheit 4 ist dabei jeweils derart gewählt, dass die Auflager 6a und 6b durch die aufgeheizte Kante 3a in dem Anlagebereich nicht beschädigt oder in ihrer Führungsfunktion beeinträchtigt werden. Ebenso wird die rekonturierte Kante 3a durch die Auflager 6a, 6b nicht beschädigt.

Für den Fall, dass zum Verrunden der Kante 3a ein spanabhebendes Verfahren wie Schleifen, Fräsen oder Schaben in der Bearbeitungseinheit 4 eingesetzt wird, kann die ursprüngliche Erosionskontur 17 unter Reduzierung der Sehnenlänge 21 zu einer aerodynamisch vorteilhaften Spankontur 27 geformt werden. Die erzeugte Spankontur 27 ist dabei hinsichtlich ihrer aerodynamischen Eigenschaften besser als die Erosionskontur 17.

Die Bearbeitungseinheit 4 kann auch eine Kombination der weiter oben genannten Bearbeitungsverfahren umfassen, welche in Längsrichtung der Kante 3a hintereinander angeordnet sind, so dass die Kante 3a beispielsweise nacheinander mit verschiedenen Bearbeitungsverfahren bearbeitet wird. So ist es zum Beispiel denkbar, die Kante 3a durch Auftragsschweißen zuerst mit zusätzlichem Material zu verdicken, und anschließend die Sollform der Kante 3a durch Schleifen oder ein spanabhebendes Bearbeitungsverfahren herzustellen. Während dieser Bewegung wird durch die Vorrichtung 1 die durch Erosion und sonstigen Verschleiß in der Form veränderte Kante 3a zu einer aerodynamisch günstigeren Form rekonturiert und insbesondere verrundet.

Eine bevorzugte Führung der Vorrichtung 1 kann dadurch erzielt werden, indem die Auflager 6a und 6b und die Seitenlager 5a und 5b in in einem Winkel von 90 Grad zueinander stehenden Richtungen an der Schaufel zur Anlage gelangen. Die Auflager 6a und 6b liegen senkrecht auf der Kante 3a auf, die Seitenlager in einem 90 Grad Winkel dazu in seitlicher Richtung 7.

In der Figur 9 ist eine weitere Verbesserung dargestellt. Dem zugrunde liegt ein bei bekannten spanabhebenden Rekonturierungsverfahren auftretendes Problem. Beispielsweise bei der in der Druckschrift US 6,302,625 B1 beschriebenen Vorrichtung kann es bei Einkerbungen an Schaufelkanten zu dem Fall kommen, dass die dort eingesetzte Bearbeitungseinheit einer zusätzlichen Vertiefung nicht folgen kann.

Diese Vertiefungen werden entsprechend bestimmter Vorgaben eingebracht, wenn zum Beispiel eine Kerbe, durch einen Stein oder ähnliches, in die Kante der Schaufel eingebracht wurde. Das Verrunden nutzt definierte Radien der Gesamtverrundung und darf nur über einen bestimmten Bereich der Vorderkante eingebracht werden. Folgt nun das Bearbeitungswerkzeug bzw. die Bearbeitungseinheit nicht genau der Kontur, sondern reagiert beispielsweise durch den Abstand eingesetzter Auflager verzögert auf die Vertiefung, so wird die Vertiefung bei Eintauchen bzw. Absenken des ersten Auflagers in die Vertiefung, der ursprüngliche Bereich der Verrundung (engl. Blendung) weiter ausgedehnt, wodurch es zu einer Überschreitung des zulässigen Öffnungsbereichs kommen kann.

Zusätzlich zu dem unnötigen Werkstoffabtrag beim Eintreten, Eintauchen bzw. Absenken des ersten Auflagers in die Vertiefung, folgt ein reduzierter Abtrag im tiefsten Punkt der Vertiefung dadurch, dass Auflager einen linearen Verlauf der Eintritts- oder Austrittskante vorsehen. Beim Herausfahren aus der Vertiefung folgt ein weiterer unnötiger Materialabtrag, da das dem spanabhebenden Prozess folgende Auflager noch in der Vertiefung ist, während der Spanabnehmer schon die Austrittskante der Vertiefung passiert und damit mit undefiniert und im Zweifelsfall unnötig viel Materialabtrag bearbeitet.

Abhilfe schafft hier eine druckgesteuerte Zustellung der Bearbeitungseinheit zur Bearbeitungskante wie dies in der Figur 9 dargestellt ist.

Diese Drucksteuerung definiert die Andruckkraft der Bearbeitungseinheit 4. Die Bearbeitungseinheit 4 folgt damit der Kante 3a kraftgesteuert. Alternativ können die Sensoren eingesetzt werden, um eine Wegsteuerung mit gleicher Bewegungsform zu realisieren. Vorzugsweise wird kraftgesteuert mit einer Pneumatikeinheit gearbeitet. Diese wird des Weiteren dazu eingesetzt, die Bearbeitungseinheit 4 bei Ende der Bearbeitung von dem Werkstück abzuheben, so dass zum Beispiel ein übermäßiger Materialabtrag bei Ende der Bearbeitung, also bei stehender Vorrichtung, verhindert wird. Des Weiteren wird verhindert, dass schädliche Reibung bei stehender Vorrichtung eine Überhitzung des (Titan-)Grundwerkstoffs verursacht.

Die Verstellung der Bearbeitungseinheit 4 wird hierbei vorzugsweise durch Lineareinheiten geführt. Die dadurch ermöglichte Verschiebeachse 9 ist in Richtung zur Kante 3a in Vertikalrichtung 30 ausgerichtet. Die Lineareinheiten sind dabei vorzugsweise als Schwalbenschwanzführungen oder Säulenführungen ausgeführt.

### Bezugszeichenliste:

- 1: Vorrichtung
- 2: Schaufel
- 3a: Kante
- 3b: Saugseite
- 3c: Druckseite
- 4: Bearbeitungseinheit
- 5a: Seitenlager
- 5b: Seitenlager
- 6a: Auflager
- 6b: Auflager
- 7: seitliche Richtung
- 8: Bearbeitungsrichtung
- 9: Verschiebeachse
- 10: Verstellkraft
- 11: Rolle
- 12: Bearbeitungsebene
- 13: Kontaktebene
- 14: Kontaktebene
- 15: Achse
- 16: Drehpunkt
- 17: Erosionskontur
- 18: Neukontur
- 19: wiedererstarrtes Material
- 20: Grundmaterial
- 21: Sehnenlängenabschnitt
- 22: Anlagepunkte
- 23: Verstelleinheit
- 24: Andruck und/oder Antriebsrolle
- 26: Rollenpaar
- 27: Spankontur
- 30: Vertikalrichtung

## Patentansprüche

1. Vorrichtung (1) zum Rekonturieren einer Gasturbinenschaufel (2) mit:
- mindestens einem Auflager (6a, 6b), das dazu eingerichtet ist, während des Rekonturierens auf einer Kante (3a) der Gasturbinenschaufel (2) aufzuliegen,
- mindestens einem Seitenlager (5a, 5b), das dazu eingerichtet ist, während des Rekonturierens auf der Saug- und/oder Druckseite (3b, 3c) der Gasturbinenschaufel (2) anzuliegen,
- einer Bearbeitungseinheit (4), über die die Bearbeitung der Gasturbinenschaufel (2) erfolgt, dadurch gekennzeichet, dass die Bearbeitungseinheit (4) dazu eingerichtet ist, mittels eines Energiestrahls mindestens einen Teilbereich der Kante (3a) derart gezielt aufzuschmelzen, dass der Werkstoff im Wesentlichen ohne Zugabe von zusätzlichem Werkstoff zu einer Neukontur (18) erstarrt.

2. Vorrichtung (1) nach Anspruch 1, **dadurch gekennzeichnet, dass** die Vorrichtung mindestens zwei Auflager (6a, 6b) und mindestens zwei Seitenlager (5a, 5b) aufweist.

3. Vorrichtung (1) nach Anspruch 2 **dadurch gekennzeichnet, dass** die Bearbeitungseinheit (4) zwischen den zwei Auflagern (6a, 6b) angeordnet ist.

4. Vorrichtung (1) nach einem der vorangegangenen Ansprüche, **dadurch gekennzeichnet, dass** das oder die Seitenlager (5a, 5b) jeweils mindestens zwei Anlagepunkte (22) und/oder Anlageflächen aufweisen.

5. Vorrichtung (1) nach Anspruch 4, **dadurch gekennzeichnet, dass** die Anlagepunkte (22) und/oder Anlageflächen mindestens eines Seitenlagers (5a, 5b) in einer Kontaktebene (13, 14) mit dem Auflagepunkt (22) bzw. der Auflagefläche eines Auflagers (6a, 6b) liegen.

6. Vorrichtung (1) nach Anspruch 5, **dadurch gekennzeichnet, dass** die Anlagepunkte (22) und/oder Anlageflächen mindestens eines weiteren Seitenlagers (5a, 5b) in einer Kontaktebene (13, 14) mit dem Auflagepunkt (22) bzw. der Auflagefläche eines weiteren Auflagers (6a, 6b) liegen.

7. Vorrichtung (1) nach einem der vorangegangenen Ansprüche, **dadurch gekennzeichnet, dass** ein oder mehrere der Auflager (6a, 6b) und/oder Seitenlager (5a, 5b) durch drehbar gelagerte Rollen (11) gebildet sind.

8. Vorrichtung (1) nach einem der vorangegangenen Ansprüche, **dadurch gekennzeichnet, dass** auf der den Seitenlagern (5a, 5b) gegenüberliegenden Saug- und/oder Druckseite (3b, 3c) der Gasturbinenschaufel (2) mindestens eine Anpresseinrichtung vorgesehen ist.

9. Vorrichtung (1) nach Anspruch 8, **dadurch gekennzeichnet, dass** die mindestens eine Anpresseinrichtung Pneumatik-, Hydraulik- und/oder Federelemente umfasst.

10. Vorrichtung (1) nach Anspruch 8 oder 9, **dadurch gekennzeichnet, dass** die Anpresseinrichtung drehbar gelagerte Rollen (11) umfasst.

11. Vorrichtung (1) nach einem der Ansprüche 7 bis 10, **dadurch gekennzeichnet, dass** zumindest eine Rolle (11) über eine Antriebseinrichtung antreibbar ist.

12. Vorrichtung (1) nach einem der Ansprüche 8 bis 11, **dadurch gekennzeichnet, dass** die Antriebseinrichtung und die Bearbeitungseinheit (4) gekoppelt ansteuerbar sind.

13. Vorrichtung (1) nach einem der vorangegangenen Ansprüche, **dadurch gekennzeichnet, dass** die Bearbeitungseinheit (4) eine Lasereinheit umfasst.

14. Vorrichtung (1) nach einem der vorangegangenen Ansprüche, **dadurch gekennzeichnet, dass** mindestens eines der Auflager (6a, 6b) zwei Rollen (11) umfasst, die über eine drehbar gelagerte Achse (15) miteinander verbunden sind, und wobei die Bearbeitung zwischen den zwei Rollen (11) erfolgt.

## Claims

1. Device (1) for recontouring a gas turbine blade (2), comprising:
- at least one support (6a, 6b) which is configured to rest on an edge (3a) of the gas turbine blade (2) during the recontouring,
- at least one side bearing (5a, 5b) which is configured to rest against the suction side and/or pressure side (3b, 3c) of the gas turbine blade (2) during the recontouring,
- a machining unit (4) with which the machining of the gas turbine blade (2) is carried out, **characterized in that** the machining unit (4) is configured to melt at least a portion of the edge (3a) through a beam of energy in such a controlled way that the material solidifies into a new contour (18), substantially without the addition of supplementary material.

2. Device (1) according to claim 1, **characterized in that** the device includes at least two supports (6a, 6b) and at least two side bearings (5a, 5b).

3. Device (1) according to claim 2, **characterized in that** the machining unit (4) is disposed between the two supports (6a, 6b).

4. Device (1) according to any one of the preceding claims, **characterized in that** each of the side bearings (5a, 5b) includes at least two contacting points (22) and/or contacting surfaces.

5. Device (1) according to claim 4, **characterized in that** the contacting points (22) and/or contacting surfaces of at least one side bearing (5a, 5b) are disposed in a contact plane (13, 14) with the supporting point (22) or the supporting surface of a support (6a, 6b).

6. Device (1) according to claim 5, **characterized in that** the contacting points (22) and/or contacting surfaces of at least one further side bearing (5a, 5b) are disposed in a contact plane (13, 14) with the supporting point (22) or the supporting surface of a further support (6a, 6b).

7. Device (1) according to any one of the preceding claims, **characterized in that** one or more of the supports (6a, 6b) and/or side bearings (5a, 5b) are formed by pivot-mounted rollers (11).

8. Device (1) according to any one of the preceding claims, **characterized in that** at least one pressing assembly is provided on the suction side and/or pressure side (3b, 3c) of the gas turbine blade (2) facing the side bearings (5a, 5b).

9. Device (1) according to claim 8, **characterized in that** the at least one pressing assembly includes pneumatic elements, hydraulic elements and/or spring elements.

10. Device (1) according to claim 8 or 9, **characterized in that** the pressing assembly includes pivot-mounted rollers (11).

11. Device (1) according to one of the claims 7 to 10, **characterized in that** at least one roller (11) can be driven by a driving device.

12. Device (1) according to one of the claims 8 to 11, **characterized in that** the driving device and the machining unit (4) are controllable in a coupled manner.

13. Device (1) according to any one of the preceding claims, **characterized in that** the machining unit (4) includes a laser unit.

14. Device (1) according to any one of the preceding claims, **characterized in that** at least one of the supports (6a, 6b) includes two rollers (11) which are connected to one another by a pivot-mounted shaft (15), and wherein the machining is carried out between the two rollers (11).

## Revendications

1. Dispositif (1) de reprofilage d'une aube de turbine à gaz (2) comportant :
- au moins un palier (6a, 6b) conçu pour reposer sur une arête (3a) de l'aube de turbine à gaz (2) pendant le reprofilage,
- au moins un palier latéral (5a, 5b) conçu pour s'appuyer, pendant le reprofilage, sur l'extrados et/ou l'intrados (3b, 3c) de l'aube de turbine à gaz (2),
- une unité d'usinage (4), par laquelle est réalisé l'usinage de l'aube de turbine à gaz (2),
**caractérisé en ce que** l'unité d'usinage (4) est conçue pour faire fondre de manière ciblée au moins une zone partielle de l'arête (3a) au moyen d'un faisceau d'énergie de telle sorte que la matière se solidifie pour former un nouveau profil (18) sensiblement sans ajout de matière supplémentaire.

2. Dispositif (1) selon la revendication 1, **caractérisé en ce que** le dispositif présente au moins deux paliers (6a, 6b) et au moins deux paliers latéraux (5a, 5b).

3. Dispositif (1) selon la revendication 2, **caractérisé en ce que** l'unité d'usinage (4) est disposée entre les deux paliers (6a, 6b).

4. Dispositif (1) selon l'une quelconque des revendications précédentes, **caractérisé en ce que** le ou les paliers latéraux (5a, 5b) présentent respectivement au moins deux points d'appui (22) et/ou surfaces d'appui.

5. Dispositif (1) selon la revendication 4, **caractérisé en ce que** les points d'appui (22) et/ou les surfaces d'appui d'au moins un palier latéral (5a, 5b) se situent dans un plan de contact (13, 14) avec respectivement le point de support (22) et la surface de support d'un palier (6a, 6b).

6. Dispositif (1) selon la revendication 5, **caractérisé en ce que** les points d'appui (22) et/ou les surfaces d'appui d'au moins un autre palier latéral (5a, 5b) se situent dans un plan de contact (13, 14) avec respectivement le point de support (22) et la surface de support d'un autre palier (6a, 6b).

7. Dispositif (1) selon l'une quelconque des revendications précédentes, **caractérisé en ce qu'**un ou plusieurs des paliers (6a, 6b) et/ou des paliers latéraux (5a, 5b) sont formés par des galets (11) montés rotatifs.

8. Dispositif (1) selon l'une quelconque des revendications précédentes, **caractérisé en ce qu'**au moins un moyen de pression est prévu sur l'extrados et/ou l'intrados (3b, 3c) de l'aube de turbine à gaz (2) en regard des paliers latéraux (5a, 5b).

9. Dispositif (1) selon la revendication 8, **caractérisé en ce que** l'au moins un moyen de pression comprend des éléments pneumatiques, hydrauliques et/ou à ressorts.

10. Dispositif (1) selon la revendication 8 ou 9, **caractérisé en ce que** le moyen de pression comprend des galets (11) montés rotatifs.

11. Dispositif (1) selon l'une des revendications 7 à 10, **caractérisé en ce qu'**au moins un galet (11) peut être entraîné par l'intermédiaire d'un moyen d'entraînement.

12. Dispositif (1) selon l'une des revendications 8 à 11, **caractérisé en ce que** le moyen d'entraînement et l'unité d'usinage (4) peuvent être pilotés accouplés.

13. Dispositif (1) selon l'une quelconque des revendications précédentes, **caractérisé en ce que** l'unité d'usinage (4) comprend une unité laser.

14. Dispositif (1) selon l'une quelconque des revendications précédentes, **caractérisé en ce qu'**au moins un des paliers (6a, 6b) comprend deux galets (11), qui sont reliés entre eux par l'intermédiaire d'un axe (15) monté rotatif, et l'usinage s'effectue entre les deux galets (11).
